# EUROPÄISCHE PATENTSCHRIFT

(11) **EP 1 375 274 B1**
(45) Veröffentlichungstag und Bekanntmachung des Hinweises auf die Patenterteilung: **25.10.2006**
(21) Anmeldenummer: 03002361.8
(22) Anmeldetag: 04.02.2003
(51) Int. Cl.: B60S 1/32

(54) **Wischerarm für ein Fahrzeug-Scheibenwischer**
Wiper arm for a vehicle windscreen wiper
Bras pour essuie-glace de véhicule

(30) Priorität: 28.06.2002 DE 10229236
(43) Veröffentlichungstag der Anmeldung: 02.01.2004
(73) Patentinhaber: ROBERT BOSCH GMBH, 70442 Stuttgart (DE)
(72) Erfinder: Bauer, Peter-Josef, 3300 Tienen (BE); Knauf, Richard, 67480 Roppenheim (DE); Wilms, Christian, 3582 Koersel-Beringen (BE); Verelst, Hubert, 3300 Tienen (BE); Grammens, Joris, 3350 Linter (BE); Vangeel, Tom, 3540 Herk-de-Stad (BE)

(56) Entgegenhaltungen:
- WO-A-00/01564
- WO-A-01/00464
- DE-A1- 19 850 917
- FR-A- 2 762 567
- FR-A- 2 766 777

## Beschreibung

### Stand der Technik

Die Erfindung geht aus von einem Wischerarm für einen Fahrzeug-Scheibenwischer nach dem Oberbegriff des Anspruchs 1. Dokument DE-A-19850917 offenbart so einem Wischerarm.

Scheibenwischeranlagen in Kraftfahrzeugen weisen mindestens einen Scheibenwischer auf, der von einem elektrischen Antriebsmotor über ein Wischergestänge in eine hin- und hergehende Schwenkbewegung versetzt wird. Der Scheibenwischer hat einen Wischerarm oder Wischerhebel, der aus einer Wischstange, einem an dem einen Ende der Wischstange befestigten Gelenkteil und einem an dem anderen Ende der Wischstange befestigten Adapter für die wechselbare Halterung eines Wischblatts zusammengesetzt ist. Gelenkteil und Adapter sind endseitig auf die Wischstange aufgeschoben, weshalb die Wischstange ein kleineres Querschnittsprofil aufweist als Gelenkteil und Adapter im Aufschiebebereich. Gelenkteil und Adapter werden auf der Wischstange vercrimpt, so daß zwischen Gelenkteil und Wischstange einerseits und Adapter und Wischstange andererseits jeweils eine form- und kraftschlüssige Verbindung hergestellt ist. Das Gelenkteil ist über ein Gelenk mit einem Freiheitsgrad, dessen Gelenkachse etwa parallel zur Fahrzeugscheibe ausgerichtet ist, an einem Befestigungsteil festgelegt, das zu einer Schwenkbewegung in einer zur Fahrzeugscheibe parallelen Ebene antreibbar ist. Eine Zugfeder, die einerseits an der Wischstange und andererseits an dem Befestigungsteil festgelegt ist, erzeugt eine das Wischblatt mit seiner Wischleiste gegen die Fahrzeugscheibe andrückende Anpreßkraft. Das Gelenk erlaubt außerdem das Abschwenken des Wischerarms mit Wischblatt von der Fahrzeugscheibe, wobei die Zugfeder in eine Übertotpunktlage gebracht wird.

### Vorteile der Erfindung

Der erfindungsgemäße Wischerarm mit den Merkmalen des Anspruchs 1 hat den Vorteil eines verbesserten stilistischen und ästhetischen Aussehens und einer verbesserten Funktionalität. Durch die auf dem freien Wischstangenabschnitt befestigbare, insbesondere aufclipsbare, Kappe hat der Wischerarm ein ansprechendes Design mit glatten, durchgehenden Flächen ohne Ecken und Kanten, was auch zu einem verbesserten Hochgeschwindigkeitsverhalten des Wischers führt, da durch die fehlenden Ecken und Kanten am Wischerarm nur geringe Turbulenzen an diesem auftreten.

Der erfindungsgemäße Wischerarm mit den Merkmalen des Anspruchs 3 hat die gleichen Vorteile in Design und Funktion wie sie vorstehend beschrieben sind, insbesondere dann, wenn gemäß einer bevorzugten Ausführungsform der Erfindung beide endseitigen Aufschubbereiche der Wischstange für Gelenkteil und Adapter im Querschnitt reduziert sind. Gelenkteil und Adapter stoßen dann bündig an den ein gleiches Querschnittsprofil aufweisenden Mittelabschnitt der Wischstange an, so daß wiederum der Wischerarm durchgehende Flächen ohne Ecken und Kanten besitzt.

Der erfindungsgemäße Wischerarm mit den Merkmalen des Anspruchs 6 hat neben den gleichen, wie vorstehend beschriebenen Vorteilen noch den zusätzlichen Vorteil, daß durch verschieden lange Zwischenstücke mit den gleichen Bauteilen Wischerarme verschiedener Länge hergestellt werden können, es also eine Änderung weder des mit dem Adapter noch des mit dem Gelenkteil vercrimpten Stangenteils bedarf. Werden zudem noch unterschiedliche Gelenkteile vorgehalten, so kann ein Baukastensystem für unterschiedliche Fahrzeugtypen mit reduziertem Kostenaufwand verwirklicht werden.

Durch die in den übrigen Ansprüchen aufgeführten Maßnahmen sind vorteilhafte Weiterbildungen und Verbesserungen des im Anspruch 1 oder Anspruch 3 oder Anspruch 6 angegebenen Wischerarms möglich.

### Zeichnung

Die Erfindung ist anhand von in der Zeichnung dargestellten Ausführungsbeispielen in der nachfolgenden Beschreibung näher erläutert. Es zeigen perspektivisch dargestellt:
- Fig. 1: einen Wischerarm für einen Fahrzeug-Scheibenwischer gemäß einem ersten Ausführungsbeispiel,
- Fig. 2: einen Wischerarm gemäß einem zweiten Ausführungsbeispiel,
- Fig. 3: eine Einzelheit des Wischerarms in Fig. 2,
- Fig. 4: einen Wischerarm gemäß einem dritten Ausführungsbeispiel,
- Fig. 5: eine Einzelheit des Wischerarms in Fig. 4,
- Fig. 6: eine Draufsicht eines Scheibenwischers mit einem Wischerarm gemäß einem vierten Ausführungsbeispiel und einem abschnittweise dargestellten Wischblatt,
- Fig. 7: eine Unteransicht des Scheibenwischers in Fig. 6,
- Fig. 8: ausschnittweise eine Unteransicht des Wischerarms des Scheibenwischers in Fig. 6 oder 7, vergrößert dargestellt,
- Fig. 9: eine gleiche Darstellung wie in Fig. 8 eines Wischerarms gemäß einem fünften Ausführungsbeispiel.

### Beschreibung der Ausführungsbeispiele

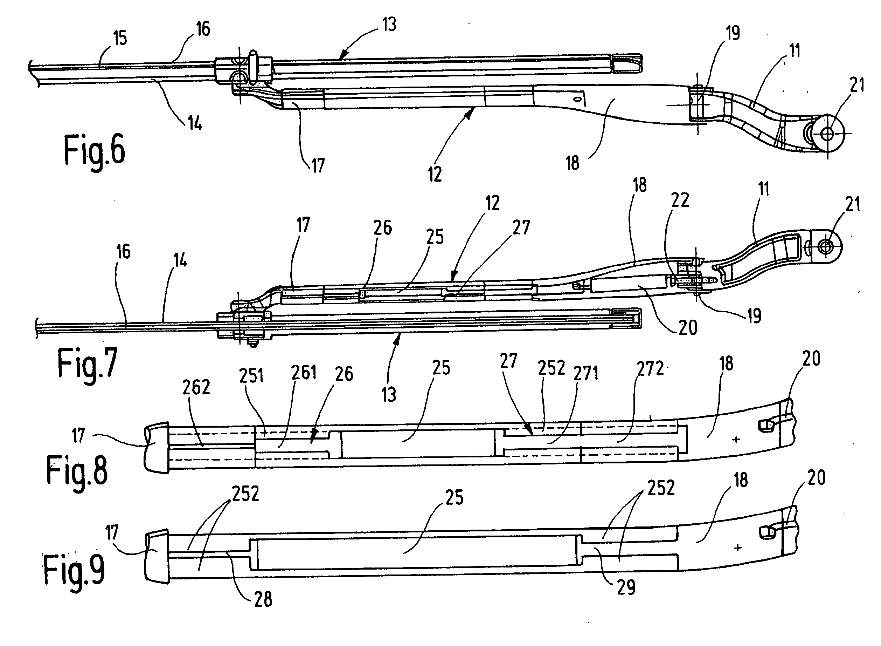

Ein Scheibenwischer für Fahrzeugscheiben, wie er in Fig. 6 und 7 in zwei verschiedenen Ansichten zu sehen ist, umfaßt ein auf einer zur Schwenkbewegung antreibbaren Abtriebswelle eines Wischergestänges über eine Buchse 21 drehfest aufsteckbares Befestigungsteil 11, einen mit diesem gelenkig verbundenen Wischerhebel oder Wischerarm 12 und ein am Ende des Wischerarms 12 gelenkig gehaltenes Wischblatt 13. Das Wischblatt 13 besitzt in bekannter Weise einen Krallenbügel 14, an dem eine Federschiene 15 mit Gummiwischleiste 16 befestigt ist. Das Wischblatt 13 ist mittig von einem Adapter 17 gehalten, der Teil des Wischerarms 12 ist. Die Verbindung des Wischerarms 12 zu dem Befestigungsteil 11 ist durch ein Schwenkgelenk 19 hergestellt, dessen Schwenkachse etwa rechtwinklig zu der Achse der Abtriebswelle für das Befestigungsteil 11 ausgerichtet ist. Wie in Fig. 7 zu sehen ist, greift eine Zugfeder 20 einerseits am Gelenkteil 18 und andererseits an einem C-Bügel 22 an, dessen anderes Ende im Befestigungsteil 11 festgelegt ist. Die von der Zugfeder 20 erzeugte Zugkraft führt zu einer Anpressung der Gummiwischleiste 16 an die Fahrzeugscheibe.

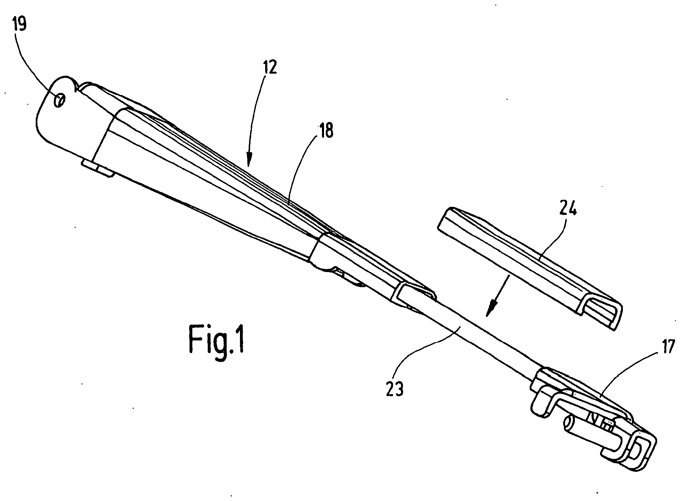

Bei dem in Fig. 1 dargestellten Ausführungsbeispiel des Wischerarms 12 verbindet eine Wischstange 23 das Gelenkteil 18 und den Adapter 17. Hierzu sind Adapter 17 und Gelenkteil 18 auf jeweils ein Ende der Wischstange 23 aufgeschoben und auf der Wischstange 23 vercrimpt, wozu die Wischstange 23 ein kleineres Querschnittsprofil aufweist als die auf die Wischstange 23 aufgeschobenen Endbereiche von Adapter 17 und Gelenkteil 18. Wie Fig. 1 zeigt, entstehen durch das Aufschieben von Adapter 17 und Gelenkteil 18 auf die querschnittskleinere Wischstange 23 Absätze, die einerseits das Design des Wischerarms 12 verschlechtern und andererseits wegen Ausbildung von Turbulenzen, insbesondere bei höheren Fahrgeschwindigkeiten, die einwandfreie Funktion des Scheibenwischers bezüglich einer ausreichenden Reinigungskraft beeinträchtigen. Um dieses zu umgehen, ist auf dem zwischen dem Adapter 17 und dem Gelenkteil 18 freiliegenden Mittelabschnitt der Wischstange 23 eine sich im wesentlichen über den Mittelabschnitt erstreckende Kappe 24 befestigt, insbesondere aufgeklipst, die aus Kunststoff oder aus dem gleichen Material wie Gelenkteil 18 und Adapter 17 bestehen kann. Diese Kappe 24 ist im Querschnitt so ausgebildet, daß die Stoßstellen von Kappe 24 einerseits und Adapter 17 und Gelenkteil 18 andererseits gleiche Außenkonturen aufweisen, so daß ein Übergang vom Gelenkteil 18 zur Kappe 24 und von der Kappe 24 zum Adapter 17 optisch kaum erkannt werden kann. Da der Übergang zumindest im wesentlichen nahtlos erfolgt, sind auch die zuvor vorhandenen Absätze, die verantwortlich für Ausbildung großer Turbulenzen sind, beseitigt.

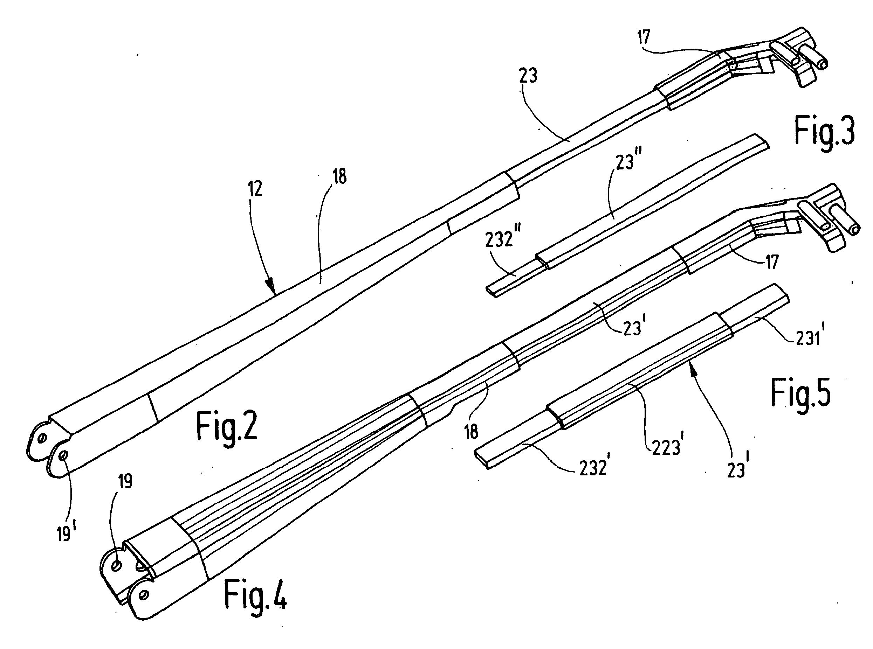

Bei dem in Fig. 4 dargestellten weiteren Ausführungsbeispiel des Wischerarms 12 ist das gleiche Ziel dadurch verwirklicht, daß die Wischstange 23' ein Querschnittsprofil erhält, dessen Außenkontur den Außenkonturen der einander zugekehrten Stirnflächen von Gelenkteil 18 und Adapter 17 entspricht. Die in Fig. 5 einzeln dargestellte Wischstange 23' ist an jedem Ende mit einem im Querschnitt reduzierten Endabschnitt 231', 232' versehen, dessen axiale Länge der Eintauchtiefe der Wischstange 23' in das Gelenkteil 18 bzw. in den Adapter 17 entspricht. Die Querschnittsreduzierung ist dabei so vorgenommen, daß Adapter 17 und Gelenkteil 18 formschlüssig auf die Endabschnitt 231' und 232' aufgeschoben und dort vercrimpt werden können. Die aneinanderliegenden Stoßstellen von Mittelteil 223' der Wischstange 23' einerseits und Adapter 17 und Gelenkteil 18 andererseits sind damit wiederum bündig. Zur Verbesserung der Aerodynamik des Wischerarms 12 sind die Längskanten von Wischstange 23', Gelenkteil 18 und Adapter 17 gebrochen, also abgeschrägt, oder gerundet ausgeführt, wie dies in Fig. 4 und 5 angedeutet ist.

In dem in Fig. 2 dargestellten Ausführungsbeispiel des Wischerarms 12 ist die in Fig. 3 einzeln dargestellte Wischstange 23" in gleicher Weise wie in Fig. 4 und 5 ausgebildet, jedoch mit dem Unterschied, daß nur ein einziger Endabschnitt 232" im Querschnitt reduziert ist. Dieser Endabschnitt 232" wird wiederum formschlüssig in das Gelenkteil 18 eingeschoben und das Gelenkteil 18 auf dem Endabschnitt 232" vercrimpt. Der Adapter 17 ist auf das Vollprofil der Wischstange 23" am anderen Ende aufgeschoben und vercrimpt, so daß hier ein Absatz zwischen der Außenkontur der Wischstange 23" und dem Adapter 17 erhalten bleibt. Diese Ausbildung der Wischstange 23" ist mit Abstrichen von einem optimierten Design dort von Interesse, wo zur Erzielung eines preiswerten, schmalen Wischerarms 12 das Gelenkteil 18 nur ein relativ kleines Querschnittsprofil aufweist, andererseits aber herkömmliche Wischblätter im Adapter 17 aufgenommen werden sollen.

Selbstverständlich ist es auch möglich, die Wischstange 23' nur im Endabschnitt 231' im Querschnitt zu reduzieren und im übrigen das Vollprofil beizubehalten. In diesem Fall ergibt sich ein Absatz an der Stoßstelle zwischen Gelenkteil 18 und Wischstange 23'.

Der in Fig. 6 - 8 dargestellte, in Verbindung mit dem zuvor beschriebenen Scheibenwischer eingesetzte Wischerarm 12 ist insoweit modifiziert, als die Wischstange zweiteilig ausgeführt ist und ein Stangenteil 26 und ein Stangenteil 27 umfaßt. Auf das Stangenteil 26 ist der Adapter 17 aufgeschoben und vercrimpt, auf das Stangenteil 27 ist das Gelenkteil 18 aufgeschoben und vercrimpt, und zwar jeweils so, daß beide Stangenteile 26, 27 mit einem Abschnitt 261, 271 aus dem Adapter 17 bzw. aus dem Gelenkteil 18 herausragen, der etwa dem vom Adapter 17 bzw. Gelenkteil 18 umschlossenen Abschnitt 262 bzw. 272 der Stangenteile 26, 27 entspricht. Ein Zwischenstück 25 aus gleichem Material wie der Adapter 17 und das Gelenkteil 18, das die gleiche Materialstärke aufweist wie diese, ist auf die beiden vorstehenden Abschnitte 261, 271 der Stangenteile 26, 27 so aufgesetzt, daß die Stirnseiten des Zwischenstücks 25 an den Stirnseiten von Adapter 17 und Gelenkteil 18 anliegen, und ist in dieser Position auf den beiden Abschnitten 261, 271 vercrimpt. In Fig. 8 ist der Crimpbereich des Zwischenstücks 25 auf dem Abschnitt 261 des Stangenteils 26 mit 251 und auf dem Abschnitt 271 des Stangenteils 27 mit 252 bezeichnet. Diese konstruktive Variante des Wischerarms 12 hat den Vorteil, daß mit unterschiedlich langen Zwischenstücken 25 verschiedene Längen von Wischerarmen 12 unter Benutzung der unveränderten übrigen Teile, wie Adapter 17, Stangenteile 26, 27 und Gelenkteil 18 hergestellt werden können.

Bei dem in Fig. 9 ausschnittweise in Unteransicht dargestellten Wischerarm 12 sind die Stangenteile 26, 27, wie sie in dem Wischerarm 12 gemäß Fig. 8 verwendet werden, insofern modifiziert, als die aus Adapter 17 und Gelenkteil 18 herausragenden Stangenteile einstückige Bestandteile von Adapter 17 und Gelenkteil 18 sind und zu Vorstehenden 28, 29 an Adapter 17 und Gelenkteil 18 mutiert sind. Auf diesen Vorstehenden 28, 29 ist das von dem Adapter 17 bis zum Gelenkteil 18 reichende Zwischenstück 25' aufgesetzt und auf den beiden Vorstehenden 28, 29 vercrimpt. Der Crimpbereich des Zwischenstücks 25' auf dem Vorstehende 28 des Adapters 17 ist mit 251 und auf dem Vorstehende 29 des Gelenkteils 18 mit 252 bezeichnet.

## Patentansprüche

1. Wischerarm für einen Fahrzeug-Scheibenwischer mit einer Wischstange (23), an deren einem Ende ein Gelenkteil (18) zur schwenkbaren Anbindung an ein Befestigungsteil (11) und an deren anderem Ende ein Adapter (17) zur Anbindung eines Wischblatts (13) aufgeschoben und jeweils fest mit der Wischstange (23) verbunden, vorzugsweise auf der Wischstange (23) vercrimpt, ist, **dadurch gekennzeichnet, daß** auf dem zwischen Gelenkteil (18) und Adapter (17) sich erstreckenden Wischstangenabschnitt eine im wesentlichen vom Gelenkteil (18) bis zum Adapter (17) reichende Kappe (24) befestigt, insbesondere aufgeklipst, ist und daß die aneinanderliegenden Stoßstellen von Kappe (24) und Gelenkteil (18) sowie Kappe (24) und Adapter (17) miteinander im wesentlichen bündig ausgeführt sind.

2. Wischerarm nach Anspruch 1, **dadurch gekennzeichnet, daß** die Längskanten von Kappe (24), Gelenkteil (18) und Adapter (17) gebrochen oder gerundet sind.

3. Wischerarm nach dem Oberbegriff des Anspruchs 1, **dadurch gekennzeichnet, daß** die Wischstange (23') ein Querschnittsprofil aufweist, dessen Außenkontur den Außenkonturen der einander zugekehrten Stirnflächen von Gelenkteil (18) und Adapter (17) entspricht, und daß mindestens ein Endabschnitt (231', 232') der Wischstange (23') zum Aufschieben von Adapter (17) und Gelenkteil (18) einen zu deren formschlüssigem Aufschieben reduzierten Querschnitt aufweist.

4. Wischerarm nach Anspruch 3, **dadurch gekennzeichnet, daß** die Wischstange (23') an jedem Ende einen im Querschnitt reduzierten Endabschnitt (231', 232') aufweist, dessen axiale Länge der Eintauchtiefe in den Adapter (17) bzw. in das Gelenkteil (18) entspricht.

5. Wischerarm nach Anspruch 3 oder 4, **dadurch gekennzeichnet, daß** die Längskanten von Wischstange (23'), Gelenkteil (18) und Adapter (17) gebrochen oder gerundet sind.

6. Wischerarm nach dem Oberbegriff des Anspruchs 1, **dadurch gekennzeichnet, daß** die Wischstange (23) zweiteilig ausgebildet ist und daß die beiden mit einem Abschnitt (261, 271) aus Adapter (17) und Gelenkteil (18) herausragenden Stangenteile (26, 27) durch ein Zwischenstück (25) starr miteinander verbunden sind, das sich von dem Adapter (25) bis zu dem Gelenkteil (18) erstreckt und endseitig mit diesen bündig ist.

7. Wischerarm nach Anspruch 6, **dadurch gekennzeichnet, daß** die aus Adapter (17) und Gelenkteil (18) herausragenden Stangenabschnitte einstückiger Bestandteil (28, 29) von Adapter (17) und Gelenkteil (18) sind.

8. Wischerarm nach Anspruch 6 oder 7, **dadurch gekennzeichnet, daß** das Zwischenstück (25) auf den herausragenden Stangenabschnitten (261, 271; 28, 29) vercrimpt ist.

9. Wischerarm nach einem der Ansprüche 6 - 8, **dadurch gekennzeichnet, daß** das Zwischenstück (25) aus dem gleichen Material hergestellt ist wie Adapter (17) und Gelenkteil (18).

10. Wischerarm nach einem der Ansprüche 6 - 9, **dadurch gekennzeichnet, daß** das Zwischenstück (25) die gleiche Materialstärke aufweist wie die einander zugekehrten Randbereiche von Adapter (17) und Gelenkteil (18).

## Claims

1. Wiper arm for a vehicle windscreen wiper with a wiper rod (23) onto one end of which a linking part (18) for pivotably connecting to a fastening part (11) is pushed and onto the other end of which an adaptor (17) for connecting a wiper blade (13) is pushed and respectively fixedly connected to the wiper rod (23), preferably crimped onto the wiper rod (23), **characterised in that** a cover (24) substantially extending from the linking part (18) as far as the adaptor (17) is fastened, in particular clipped, onto the wiper rod portion extending between the linking part (18) and the adaptor (17) and **in that** the adjacent joints between the cover (24) and the linking part (18) and the cover (24) and the adaptor (17) are designed to be substantially flush with one another.

2. Wiper arm according to claim 1, **characterised in that** the longitudinal edges of the cover (24), linking part (18) and adaptor (17) are bevelled or rounded.

3. Wiper arm according to the preamble of claim 1, **characterised in that** the wiper rod (23') has a cross-sectional profile of which the outer contour corresponds to the outer contour of the front faces of the linking part (18) and the adaptor (17) facing one another and **in that** at least one end portion (231', 232') of the wiper rod (23') for pushing on the adaptor (17) and the linking part (18) has a reduced cross-section so that it may be positively pushed on.

4. Wiper arm according to claim 3, **characterised in that** the wiper rod (23') has an end portion (231', 232') at each end which is reduced in cross-section, the axial length of which corresponding to the penetration depth into the adaptor (17) and/or into the linking part (18).

5. Wiper arm according to claim 3 or 4, **characterised in that** the longitudinal edges of the wiper rod (23'), linking part (18) and adaptor (17) are bevelled or rounded.

6. Wiper arm according to the preamble of claim 1, **characterised in that** the wiper rod (23) is configured in two parts and **in that** the two rod parts (26, 27) projecting with a portion (261, 271) from the adaptor (17) and the linking part (18) are rigidly connected to one another by an intermediate piece (25) which extends from the adaptor (17) as far as the linking part (18) and on the end faces is flush therewith.

7. Wiper arm according to claim 6, **characterised in that** the rod portions projecting from the adaptor (17) and the linking part (18) are an integral component (28, 29) of the adaptor (17) and the linking part (18).

8. Wiper arm according to claim 6 or 7, **characterised in that** the intermediate piece (25) is crimped onto the projecting rod portions (261, 271; 28, 29).

9. Wiper arm according to any one of claims 6-8, **characterised in that** the intermediate piece (25) is manufactured from the same material as the adaptor (17) and the linking part (18).

10. Wiper arm according to any one of claims 6-9, **characterised in that** the intermediate piece (25) has the same material strength as the edge regions facing one another of the adaptor (17) and the linking part (18).

## Revendications

1. Bras d'essuie-glace de véhicule comportant une tige d'essuie-glace (23) dont une extrémité porte une pièce d'articulation (18) reliée de manière pivotante à une pièce de fixation (11) et dont l'autre extrémité comporte un adaptateur (17) pour fixer un balai d'essuie-glace (13), la pièce d'articulation et l'adaptateur étant chaque fois engagés et solidarisés à la tige d'essuie-glace (23), de préférence sertis sur la tige d'essuie-glace (23),
**caractérisé en ce que**
le segment de la tige d'essuie-glace entre la pièce d'articulation (18) et l'adaptateur (17) porte un cache (24) allant pratiquement de la pièce d'articulation (18) à l'adaptateur (17), ce cache étant notamment enclipsé, et
les jonctions correspondantes entre le cache (24) et la pièce d'articulation (18) ainsi qu'entre le cache (24) et l'adaptateur (17) sont pratiquement à niveau.

2. Bras d'essuie-glace selon la revendication 1,
**caractérisé en ce que**
les arêtes longitudinales du cache (24) et la pièce d'articulation (18) et de l'adaptateur (17) sont cassées ou arrondies.

3. Bras d'essuie-glace selon le préambule de la revendication 1,
**caractérisé en ce que**
la tige d'essuie-glace (23') a un profil de section dont le contour extérieur correspond au contour extérieur des faces frontales en regard de la pièce d'articulation (18) et de l'adaptateur (17),
et au moins un segment d'extrémité (231', 232') de la tige d'essuie-glace (23') a une section réduite pour emmancher l'adaptateur (17) et la pièce d'articulation (18) par un emmanchement par la forme.

4. Bras d'essuie-glace selon la revendication 3,
**caractérisé en ce que**
chaque extrémité de la tige d'essuie-glace (23') a un segment d'extrémité (231', 232') de section réduite, dont la longueur axiale correspond à la profondeur de pénétration dans l'adaptateur (17) et dans la pièce d'articulation (18).

5. Bras d'essuie-glace selon les revendications 3 ou 4,
**caractérisé en ce que**
les arêtes longitudinales de la tige d'essuie-glace (23'), à la pièce d'articulation (18) et de l'adaptateur (17) sont cassées ou arrondies.

6. Bras d'essuie-glace selon le préambule de la revendication 1,
**caractérisé en ce que**
la tige d'essuie-glace (23) est en deux parties et les deux parties de tige (26, 27) dépassant selon un segment (261, 271) de l'adaptateur (17) et de la pièce d'articulation (18) sont reliés rigidement par une pièce intermédiaire (25) qui s'étend de l'adaptateur (17) à la pièce d'articulation (18) et dont les extrémités sont à niveau.

7. Bras d'essuie-glace selon la revendication 6,
**caractérisé en ce que**
les segments de tige dépassant de l'adaptateur (17) et de la pièce d'articulation (18) constituent des parties en une seule pièce (28, 29) de l'adaptateur (17) et de la pièce d'articulation (18).

8. Bras d'essuie-glace selon les revendications 6 ou 7,
**caractérisé en ce que**
la pièce intermédiaire (25) est sertie sur le segment de tige (261, 271 ; 28, 29) qui dépasse.

9. Bras d'essuie-glace selon l'une des revendications 6 à 8,
**caractérisé en ce que**
la pièce intermédiaire (25) est réalisée dans la même matière que l'adaptateur (17) et la pièce d'articulation (18).

10. Bras d'essuie-glace selon l'une des revendications 6 à 9,
**caractérisé en ce que**
la pièce intermédiaire (25) a la même épaisseur de matière que les zones de bord en regard de l'adaptateur (17) et de la pièce d'articulation (18).
